# DEMANDE DE BREVET EUROPEEN

(11) **EP 2 017 450 A1**
(43) Date de publication de la demande: **21.01.2009**
(21) Numéro de dépôt: 08300235.2
(22) Date de dépôt: 09.07.2008
(51) Int. Cl.: F02D 21/08, F02M 25/07, F02D 41/24, F02D 41/14

(54) **Système de contrôle d'un moteur à combustion interne avec procédé de protection thermique de la vanne de regulation de débit des gaz d'échappement recyclés**

(30) Priorité: 17.07.2007 FR 0756528
(71) Demandeur: Renault S.A.S., 92100 Boulogne-Billancourt (FR)
(72) Inventeur: Buis, Emmanuel, 92330 Sceaux (FR)

(57) **Abrégé**

Ce système comprend un compteur d'activation (21) associé à des cartographies de pondération (22,23) contenant un ensemble mémorisé de coefficients de pondération en fonction de points de fonctionnement normal du moteur. Ledit compteur d'activation (21) est capable de fournir un signal d'activation d'une stratégie de protection thermique de la vanne de régulation sur une sortie (36) de la bascule R-S (35), lorsque la durée totale pondérée cumulée de fonctionnement du moteur sur certains points de fonctionnement, diminuée de la durée totale pondérée cumulée de fonctionnement du moteur sur d'autres points de fonctionnement, dépasse un premier seuil. Un compteur de désactivation (21d), de même structure, permet de mettre un terme à la stratégie de protection thermique en modifiant l'état de la bascule R-S (35).

## Description

La présente invention a pour objet un système de contrôle d'un moteur à combustion interne du type comportant une boucle de recirculation partielle des gaz d'échappement munie d'une vanne de régulation de débit ainsi qu'un procédé de protection thermique de la vanne de régulation de débit.

Le contrôle d'un moteur à combustion interne se fait au moyen d'un ensemble de capteurs et d'actionneurs qui sont pilotés selon un ensemble de lois de commande ou stratégies logicielles en tenant compte de paramètres de caractérisation ou de calibration du moteur. L'ensemble de ces éléments est mémorisé dans un calculateur ou unité de contrôle électronique (UCE). La présente invention s'applique tout particulièrement au cas des moteurs de type Diesel suralimentés au moyen d'un turbocompresseur.

Pour tenir compte du durcissement des normes limitant la quantité de polluants produits à l'échappement d'un véhicule, on cherche à faire évoluer la conception des véhicules et notamment le contrôle des moteurs afin de réduire la quantité d'oxydes d'azote et de particules de suie à l'échappement. A cet effet, on peut prévoir une boucle de recirculation partielle des gaz d'échappement (appelés « EGR », pour « Exhaust Gas Recirculation »). Une certaine proportion de gaz d'échappement est alors réintroduite à l'admission du moteur. Le mélange admis dans le moteur est ainsi composé d'air frais issu du compresseur, mélangé avec des gaz d'échappement issus du collecteur d'échappement. Une vanne de régulation du débit des gaz d'échappement recyclés (dite vanne « EGR ») est insérée dans cette boucle de recirculation partielle afin de réguler la quantité de gaz d'échappement en direction de l'admission du moteur.

Les gaz d'échappement ainsi admis étant inertes vis-à-vis de la combustion, entraînent une diminution de la température maximale de combustion et diminuent l'excès d'oxygène par rapport à un moteur dépourvu d'une telle boucle de recirculation partielle. Or, la formation des oxydes d'azote est favorisée par une combustion à température et à taux d'oxygène élevés. En revanche, la formation des particules de suie est favorisée par un taux d'oxygène faible. La recirculation partielle des gaz d'échappement a donc pour conséquence directe de diminuer la quantité des oxydes d'azote et d'augmenter la quantité des particules de suie produites par la combustion.

Il devient donc nécessaire de rechercher le meilleur compromis entre la quantité d'oxydes d'azote et la quantité de particules de suie au moyen d'un pilotage approprié du débit des gaz d'échappement recyclés.

Pour réduire l'inconvénient résultant des émissions de particules de suie, on peut installer entre la turbine du turbocompresseur et le silencieux de la conduite d'échappement, un filtre à particules capable de piéger la majeure partie des particules de suie se trouvant dans l'écoulement des gaz d'échappement. Un tel filtre, qui peut par exemple être constitué par un ensemble de microcanaux, retient les particules jusqu'à atteindre un état saturé à partir duquel il est nécessaire de procéder à une combustion des particules qui ont été retenues dans le piège. Cette phase de combustion des particules piégées est appelée « phase de régénération ». Elle peut être obtenue par un dispositif de chauffage intégré dans le filtre à particules ou par des réglages spécifiques du moteur.

La vanne de régulation de débit ou vanne « EGR » est l'un des constituants subissant les plus grandes contraintes dans un tel système en raison du fait que les gaz d'échappement qui la traversent sont à haute température, et qu'elle est soumise à des conditions favorables à un encrassement. Il peut en résulter un dépassement des limites thermiques autorisées, lors du fonctionnement du moteur dans certaines conditions, pouvant conduire à une détérioration de la vanne.

La demande de brevet US 2006/0137665 décrit par exemple un système de contrôle de la température des gaz d'échappement recirculés (EGR) utilisant un échangeur de chaleur pour refroidir les gaz d'échappement recyclés et diminuer ainsi les contraintes s'exerçant sur la vanne de régulation de débit. Un tel système ne donne pas entièrement satisfaction et on constate toujours des risques importants de détérioration de la vanne de régulation de débit.

La présente invention a pour objet un système de contrôle d'un moteur à combustion interne du type comportant une boucle de recirculation partielle des gaz d'échappement munie d'une vanne de régulation de débit, dans lequel la vanne de régulation est parfaitement protégée et où l'on évite des dépassements exagérés de température susceptibles d'entraîner une détérioration de la vanne de régulation de débit.

L'invention a également pour objet un procédé de protection thermique d'une telle vanne de régulation de débit permettant de maintenir celle-ci dans des conditions ne dépassant pas les conditions de température prévues lors de la conception de la vanne.

Dans un mode de réalisation, un système de contrôle d'un moteur à combustion interne du type comportant une boucle de recirculation partielle des gaz d'échappement munie d'une vanne de régulation de débit, comprend une unité électronique de contrôle capable de contrôler le fonctionnement du moteur selon différentes lois de contrôle et différents paramètres caractéristiques du moteur.

Le système comprend un compteur d'activation associé à au moins une cartographie de pondération contenant un ensemble mémorisé de coefficients de pondération en fonction de points de fonctionnement normal du moteur. Ledit compteur d'activation est capable de fournir un signal d'activation d'une stratégie de protection thermique de la vanne de régulation lorsque la durée totale pondérée cumulée de fonctionnement du moteur sur certains points de fonctionnement, diminuée de la durée totale pondérée cumulée de fonctionnement du moteur sur d'autres points de fonctionnement, dépasse un premier seuil.

L'évolution de la température de la vanne de régulation de débit au cours du temps dépend du point de fonctionnement instantané du moteur. Pour certains points de fonctionnement, on observe une augmentation continue de la température de la vanne, jusqu'au dépassement des limites autorisées (par exemple 170°C pour le guide de vanne).

Pour d'autres points de fonctionnement au contraire, la température de la vanne est décroissante ou n'entraîne pas de risque de dépassement des limites autorisées.

La stratégie de détection des situations dangereuses consiste donc à utiliser un compteur d'activation qui s'incrémente en fonction du temps passé sur des points de fonctionnement critiques et est en revanche décrémenté en fonction du temps passé sur des points de fonctionnement favorables au refroidissement des composants de la vanne.

Grâce à l'utilisation de coefficients de pondération, les valeurs d'incrémentation et de décrémentation du compteur d'activation dépendent du point de fonctionnement et donc de l'aptitude à élever ou abaisser la température de la vanne.

Le système comprend avantageusement un moyen d'activation/désactivation recevant le signal issu du compteur d'activation et capable de modifier la valeur de consigne du débit d'air admis dans le moteur en fonction dudit signal pour adopter une stratégie de protection thermique. Ainsi, une augmentation de la valeur de consigne du débit d'air admis entraîne une diminution relative du débit des gaz d'échappement recyclés et donc une diminution de la température de la vanne.

Dans un mode de réalisation, le système comprend en outre un compteur de désactivation associé à au moins une cartographie de pondération contenant un ensemble mémorisé de coefficients de pondération en fonction de points de fonctionnement normal du moteur, ledit compteur de désactivation étant capable de fournir un signal de désactivation de la stratégie de protection thermique de la vanne de régulation lorsque la durée totale pondérée cumulée de fonctionnement du moteur sur certains points de fonctionnement, diminuée de la durée totale pondérée cumulée de fonctionnement du moteur sur d'autres points de fonctionnement, dépasse un deuxième seuil.

Le moyen d'activation/désactivation reçoit le signal issu du compteur de désactivation et est capable de modifier à nouveau, par exemple de diminuer, la valeur de consigne du débit d'air admis dans le moteur correspondant à la stratégie de protection thermique jusqu'à une valeur de consigne correspondant au fonctionnement normal du moteur.

Lorsque la boucle de recirculation comporte un échangeur de chaleur de refroidissement des gaz d'échappement et une conduite de dérivation pour by-passer ledit échangeur, chaque compteur est de préférence associé à deux cartographies de pondération, dont l'une tient compte de l'utilisation de la conduite de dérivation.

Les cartographies de pondération sont définies en fonction des conditions de fonctionnement du moteur telles que le régime de rotation et le débit de carburant ou le couple moteur. On admettra généralement les conditions les plus défavorables pour la pression atmosphérique et pour la température du liquide de refroidissement du moteur.

En revanche, on tiendra avantageusement compte de la température de l'air admis dans le moteur pour déterminer les seuils de déclenchement des signaux émis par les compteurs.

Dans un mode de réalisation avantageux, le système comprend en outre des moyens pour mémoriser l'état de chaque compteur lors d'un arrêt du moteur. Il est alors possible, lors d'un arrêt de courte durée, de reprendre le comptage/décomptage à partir des valeurs préalablement mémorisées, correspondant à l'état antérieur au moment de l'arrêt. Si, au contraire, l'arrêt est de plus longue durée, suffisante pour ramener la température de la vanne à la normale, les compteurs sont avantageusement remis à zéro pour le redémarrage ultérieur du moteur.

Selon un autre aspect de l'invention, il est proposé un procédé de protection thermique d'une vanne de régulation du débit des gaz d'échappement recirculés dans un moteur à combustion interne. Selon ce procédé, on détecte l'atteinte d'une limite thermique autorisée lors d'un fonctionnement normal du moteur et la fin du besoin d'une stratégie de protection thermique en comptabilisant la durée totale cumulée de fonctionnement du moteur sur certains points de fonctionnement, diminuée de la durée totale cumulée de fonctionnement du moteur sur d'autres points de fonctionnement. On compare ensuite le résultat à des seuils et on active ou désactive une stratégie de protection thermique de la vanne de régulation en fonction du résultat de la comparaison.

Les durées cumulées sont avantageusement pondérées en fonction du point de fonctionnement du moteur.

Enfin, on peut tenir compte de la température de l'air admis dans le moteur pour la détermination des seuils et/ou des phases d'arrêt du moteur.

L'invention sera mieux comprise à l'étude d'un mode de réalisation pris à titre d'exemple nullement limitatif et illustré par les dessins annexés, sur lesquels :
- la figure 1 illustre les principaux composants d'un système de contrôle pour un moteur à combustion interne ;
- la figure 2 montre un exemple de réalisation d'un système conforme à l'invention ;
- la figure 3 montre un exemple de détermination de la consigne de débit d'air admis dans le moteur ;
- la figure 4 illustre un exemple de régulation du débit d'air admis dans le moteur ; et
- la figure 5 est un schéma fonctionnel illustrant les principales étapes d'un procédé de protection thermique d'une vanne de régulation de débit des gaz d'échappement recirculés dans un moteur à combustion interne selon l'invention.

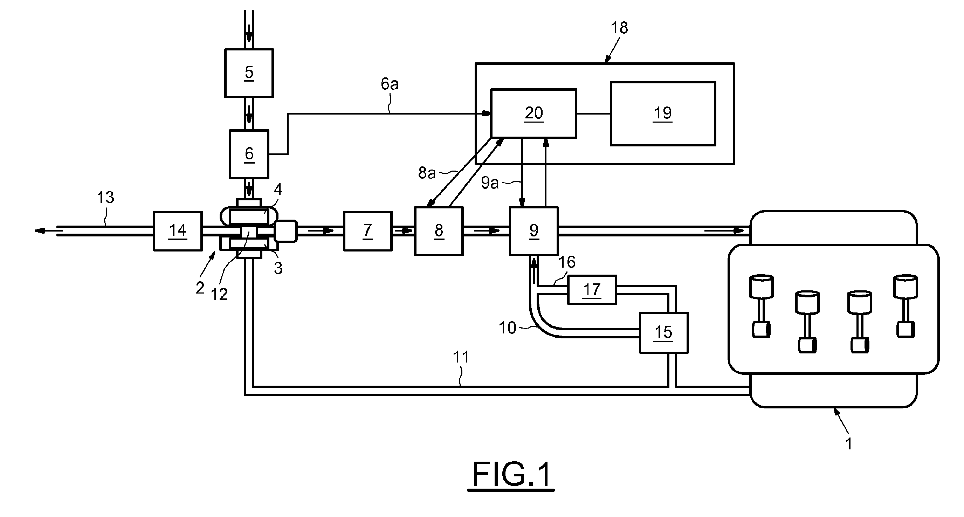

Tel qu'il est illustré sur la figure 1, un moteur à combustion interne 1 du type Diesel est associé à un turbocompresseur 2 comprenant une turbine 3 et un compresseur4. L'air frais destiné à alimenter le moteur 1 traverse tout d'abord un filtre à air 5 puis un débitmètre 6 avant d'alimenter le compresseur 4 qui élève sa pression. L'air comprimé à haute température issu du compresseur 4 est refroidi dans un échangeur de chaleur 7. Le débit d'air admis dans le moteur 1 peut être régulé par l'intermédiaire d'un volet d'admission 8 monté en aval de l'échangeur de chaleur 7 et en amont d'une vanne de régulation de débit 9 ou vanne EGR qui reçoit également, par une boucle de recirculation partielle 10, 16, une partie des gaz d'échappement en provenance du moteur 1 et se dirigeant vers la turbine 3 par la conduite d'échappement 11. Les gaz d'échappement, après avoir cédé une partie de leur énergie dans la turbine 3 qui entraîne le compresseur 4 par un arbre commun 12, s'échappent par la conduite 13 dans laquelle est monté un filtre à particules 14 capable de piéger les particules de suie se trouvant dans les gaz d'échappement.

Une vanne de by-pass 15 est également montée dans la boucle de recirculation 10, 16, de façon à diriger les gaz d'échappement soit directement dans la vanne de régulation EGR 9, par la dérivation 10, soit par l'intermédiaire de la conduite 16 à travers un échangeur de chaleur 17 destiné à refroidir les gaz d'échappement recyclés.

Une unité électronique de commande UCE 18 reçoit différents paramètres mesurés par différents capteurs et commande l'ensemble du système ainsi que le moteur à combustion lui-même, en fournissant des signaux à différents actionneurs non représentés sur la figure. On a indiqué sur la figure 1 la présence dans l'unité électronique de contrôle 18, d'un moyen 19 de calcul de la consigne d'air frais admis dans le moteur, associé à un dispositif de régulation 20 capable d'agir sur la position du volet d'admission 8 et de la vanne de régulation EGR 9 par l'intermédiaire des connexions 8a et 9a. Le dispositif de régulation 20 reçoit en outre des informations concernant le débit d'air par la connexion 6a en provenance du débitmètre 6.

Les valeurs de consigne du débit d'air admis dans le moteur sont cartographiées en fonction du régime de rotation du moteur et du débit du carburant injecté dans le moteur ou du couple moteur, les cartographies correspondantes étant mémorisées dans l'unité de contrôle électronique 18. Les valeurs de consigne de débit d'air sont ensuite corrigées en fonction de plusieurs grandeurs physiques, ces corrections diminuent ou augmentent la valeur de consigne afin de maintenir un niveau acceptable de polluants dans les gaz d'échappement. Les valeurs de consigne de débit d'air sont définies en fonction d'un compromis entre les quantités d'oxydes d'azote et les quantités de particules de suie produites par le moteur pour des points de fonctionnement stabilisés, c'est-à-dire avec un régime de rotation du moteur et un débit de carburant injecté sensiblement constants.

Le volet d'admission 8 est utilisé pour augmenter le débit des gaz d'échappement recyclés dans le moteur 1 lorsque la vanne 9 est complètement ouverte. Le volet d'admission 8 est capable de réduire la pression dans le collecteur d'admission du moteur 1 lorsqu'il n'est pas complètement ouvert, augmentant ainsi la pression différentielle aux bornes de la vanne EGR 9 et par conséquent, le débit des gaz d'échappement recyclés qui la traversent.

La vanne de by-pass 15 permet, pour certains points de fonctionnement du moteur, de ne pas refroidir les gaz d'échappement recyclés qui passent alors directement par la dérivation 10.

On a constaté que la température de certains éléments sensibles de la vanne EGR 9 tels que le guide de vanne ou le capot avant de celle-ci peut évoluer au cours du temps lorsque le moteur fonctionne sur certains point de fonctionnement spécifiques. En effet, pour certains points de fonctionnement, on observe une augmentation continue de la température de la vanne EGR 9 qui peut entraîner rapidement un dépassement des seuils limites autorisés pour éviter la détérioration de la vanne. Pour d'autres points de fonctionnement du moteur, la température de la vanne est au contraire stable, voire décroissante, de sorte qu'il n'y a pas de risque de détérioration due à une élévation trop importante de la température.

La présente invention tire profit de cette constatation pour détecter une situation risquant d'entraîner une détérioration de la vanne EGR 9 et pour déclencher une stratégie de protection thermique de la vanne.

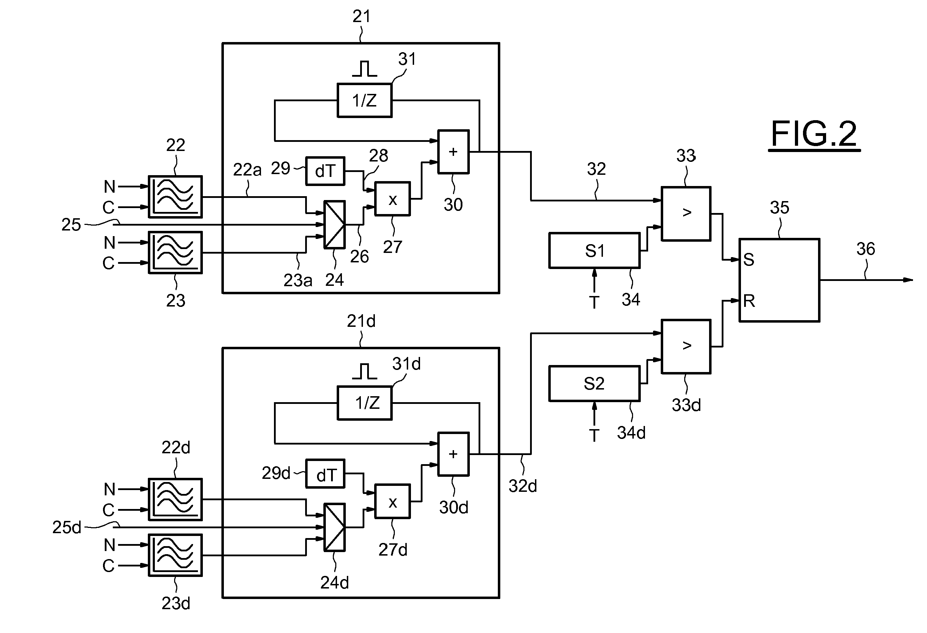

Tel qu'il est illustré sur la figure 2, le système comprend un compteur d'activation référencé 21 dans son ensemble, associé à deux cartographies de pondération 22 et 23. Chacune des deux cartographies de pondération 22, 23 contient un ensemble mémorisé de coefficients de pondération en fonction de points de fonctionnement du moteur définis en termes de régime de rotation du moteur N et du couple moteur C. La cartographie 22 est adaptée à un fonctionnement du moteur sans utilisation de la vanne by-pass 15, c'est-à-dire avec refroidissement des gaz d'échappement dans l'échangeur 17. La cartographie de pondération 23 au contraire, définit des coefficients de pondération pour un fonctionnement avec by-pass, c'est-à-dire pour le cas où les gaz d'échappement passent par la dérivation 10. Un bloc décisionnel 24 reçoit les signaux en provenance de la cartographie 22 par la connexion 22a et les signaux en provenance de la cartographie 23 par la connexion 23a. Un signal indiquant l'activation ou la non activation de la vanne de by-pass 15 est transmis au bloc décisionnel 24 par la connexion 25. Le coefficient de pondération choisi par le bloc 24 est amené par la connexion 26 à l'entrée du bloc multiplicateur 27 qui est également connecté par la connexion 26 au bloc 29 qui définit le pas de temps dT du calculateur. Le compteur 21 est ainsi capable de s'incrémenter par le bloc 30 avec rétroaction sur le bloc 31 selon un pas de calcul 1/Z.

Le compteur d'activation 21 s'incrémente en temps passé sur des points de fonctionnement critiques, c'est-à-dire des points de fonctionnement qui entraînent une augmentation de la température de la vanne EGR 9. De la même manière, le compteur d'activation 21 est décrémenté en fonction du temps passé sur les points de fonctionnement favorables au refroidissement des composants de la vanne EGR 9. La détermination du caractère plus ou moins critique ou plus ou moins favorable d'un point de fonctionnement est faite préalablement par des séries d'essais de calibration simples sur le moteur ou le type de moteur, permettant ainsi la création des deux cartographies de pondération 22 et 23. Les valeurs des incréments et des décréments dépendent ainsi des points de fonctionnement du moteur, et donc de la capacité du fonctionnement considéré à élever ou abaisser la température des composants de la vanne EGR.

Le signal issu du compteur d'activation 21 est amené par la connexion 32 à l'entrée d'un comparateur 33 qui reçoit sur sa deuxième entrée la valeur d'un seuil noté S₁ mémorisé dans le bloc 34. La calibration des deux cartographies de pondération 22 et 23 est faite de préférence dans les conditions de pression atmosphérique et de température d'eau de refroidissement du moteur les plus défavorables en ce qui concerne la température de la vanne EGR 9. Ces deux paramètres ne sont donc pas pris en compte dans le calcul effectué par le compteur d'activation. En revanche, la température de l'air ambiant peut avoir un impact non négligeable sur l'élévation de la température de la vanne EGR 9. On fait donc de préférence intervenir la température T de l'air ambiant, pour modifier la valeur du seuil S₁ comme indiqué sur la figure 2.

Une bascule R-S référencée 35 reçoit sur son entrée S par exemple, le résultat de la comparaison effectuée par le comparateur 33. Lorsque le contenu du compteur d'activation 21 dépasse le seuil S₁, modifié en fonction de la température T, un bit d'activation d'une stratégie de protection thermique de la vanne EGR 9 est émis à la sortie de la bascule 35 sur la connexion 36.

Le système comporte également un compteur de désactivation référencé 21d qui est associé à deux cartographies de pondération 22d et 23d. La structure du compteur de désactivation 21d est identique à celle du compteur d'activation 21, et les différents éléments du compteur d'activation 21d portent les mêmes références que celles du compteur d'activation 21 mais affectées de l'indice d. On retrouve donc le bloc décisionnel 24d, ainsi que les blocs de calcul 27d et 30d. Les cartographies de pondération 22d et 23d fournissent des coefficients de pondération pour des points de fonctionnement du moteur qui entraînent une diminution de la température de la vanne EGR 9. Comme c'était le cas pour le compteur d'activation 21 et les cartographies 22 et 23, on tient compte également ici de l'utilisation ou non de la vanne de by-pass 15 selon l'information provenant de la connexion 25d.

Le compteur de désactivation 21d est actif pendant la durée d'activation de la stratégie de protection thermique déclenchée à la suite de l'appariation d'un bit d'activation à la sortie de la bascule 35. Pendant la durée d'application de cette stratégie de protection, le compteur de désactivation 21d s'incrémente en temps passé sur les différents points de fonctionnement du moteur. Les valeurs d'incrémentation et de décrémentration dépendent du point de fonctionnement du moteur, et donc de la capacité du moteur, pour un point de fonctionnement déterminé, à refroidir les composants de la vanne EGR 9. Le contenu du compteur de désactivation 21 d amené par la connexion 32d au comparateur 33d est comparé à un deuxième seuil noté S₂ dans le bloc 34d. Comme c'était le cas pour le premier seuil S₁, la température T de l'air ambiant intervient dans la détermination du seuil S₂. Si le contenu du compteur de désactivation 21d est supérieur au deuxième seuil S₂, corrigé par la température T, un signal est appliqué à l'entrée R de la bascule 35 afin de désactiver la stratégie de protection thermique.

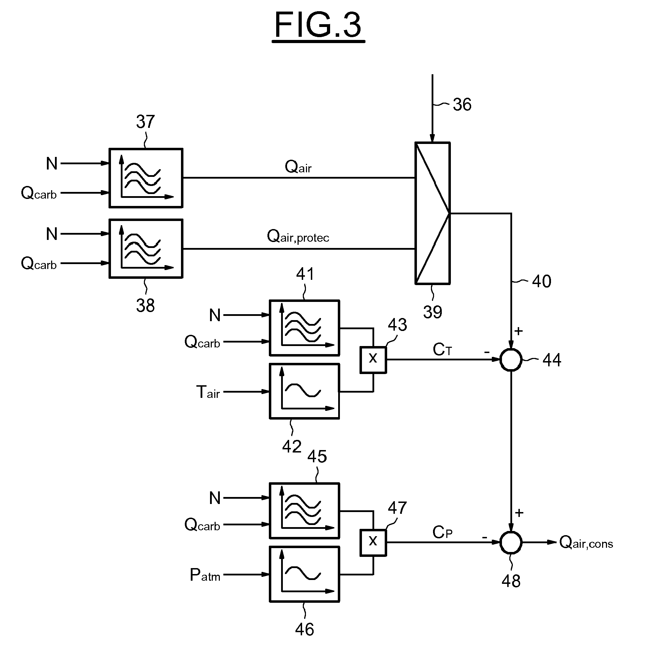

La figure 3 illustre les principaux éléments permettant la détermination de la valeur de consigne de débit d'air Q_{air,cons}.

En cas de fonctionnement normal du moteur, la consigne de débit d'air Qₐᵢᵣ est déterminée au moyen d'une cartographie de valeurs 37 en fonction du régime de rotation du moteur N et du débit de carburant injecté Q_{carb}. Une deuxième cartographie 38, également en fonction du régime de rotation du moteur N et du débit de carburant Q_{carb} permet de définir une consigne de débit d'air spécifique pour la protection thermique de la vanne EGR 9. Cette valeur de consigne est notée Q_{air,protec}. Pour cette cartographie 38, spécifique de la stratégie de protection thermique, on augmente la quantité d'air admis dans le moteur d'une quantité qui peut varier entre 20 et 25% de façon à réduire la température de la vanne EGR 9. On constate en effet qu'une telle augmentation d'air a pour effet de diminuer le débit des gaz d'échappement recyclés traversant la vanne EGR 9 et de ce fait, la température à laquelle celle-ci est exposée. Un bloc décisionnel 39 reçoit sur ses deux entrées les deux valeurs de consigne Qₐᵢᵣ et Q_{air,protec}, de façon à émettre sur sa sortie 40, la consigne de débit d'air dépendant de la présence ou de l'absence du bit d'activation de la stratégie de protection thermique qui est transmis par la connexion 36 sur le bloc décisionnel 39 en provenance de la bascule 35 illustrée sur la figure 2.

On procède à un certain nombre de corrections de la valeur de consigne du débit d'air dont deux sont indiquées à titre d'exemple sur la figure 3. C'est ainsi qu'une première cartographie 41, fonction du régime de rotation du moteur N et du débit de carburant injecté Q_{cart}, est associée à des valeurs de température d'air mémorisées dans le bloc 42. Le calcul effectué dans le bloc 43 qui reçoit le signal issu de la cartographie 41 ainsi que la température d'air Tₐᵢᵣ provenant du bloc 42, permet la détermination de la correction C_{T} en fonction de la température. Cette correction C_{T} est amenée sur un soustracteur 44 qui reçoit sur son autre entrée la valeur de consigne de débit d'air provenant du bloc décisionnel 39.

Dans les mêmes conditions, on a représenté sur la figure 3 à titre d'exemple une deuxième cartographie 43, fonction du régime de rotation du moteur N et du débit de carburant Q_{carb}, associée à des valeurs de pression atmosphérique Pₐₜₘ mémorisées dans le bloc 46. Le bloc de calcul 45 fournit une valeur de correction C_{T} qui dépend de la pression atmosphérique. Cette correction est amenée à un soustracteur 48 qui reçoit sur son autre entrée la valeur de consigne de débit d'air déjà corrigée en fonction de la température. La valeur de consigne Q_{air,cons} qui en résulte est corrigée également en fonction de la pression atmosphérique. Cette valeur de consigne correspond à un fonctionnement normal du moteur ou à un fonctionnement du moteur avec stratégie de protection thermique de la vanne EGR 9 en fonction du bit d'activation produit par la bascule 35 de la figure 2.

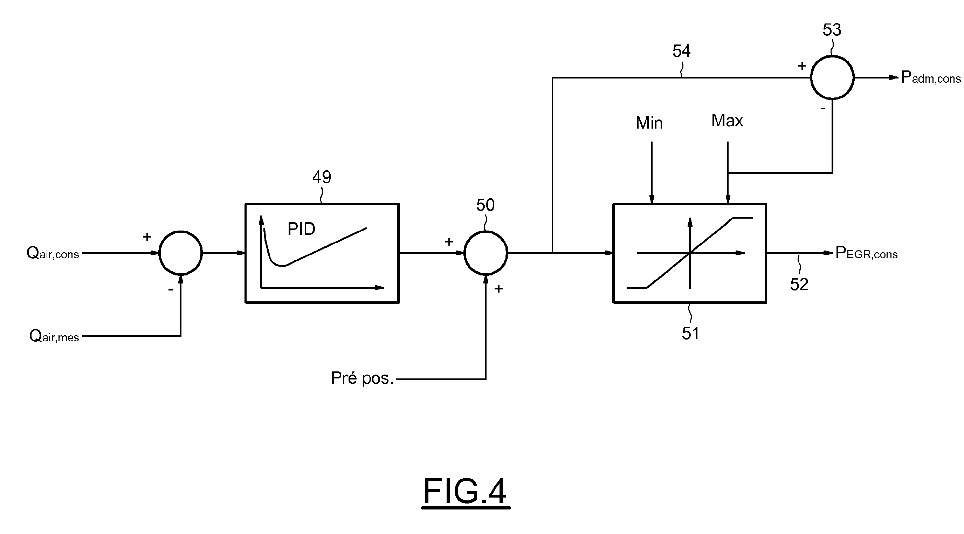

La figure 4 montre les principaux éléments de la boucle de régulation du débit d'air. Le régulateur 49, qui est par exemple un régulateur de type PID (Proportionnel Intégral Dérivé) reçoit sur son entrée un signal d'erreur qui correspond à la différence entre la consigne de débit d'air Q_{air,cons} déterminée comme il vient d'être décrit et le débit d'air mesuré Q_{air,mes} provenant du débitmètre 6 illustré sur la figure 1. Pour améliorer le temps de réponse de la boucle de régulation, une valeur de prépositionnement de la vanne EGR, P_{ré-pos}, peut être ajoutée dans l'additionneur 50 au signal de sortie du régulateur PID. La somme ainsi obtenue est limitée dans le bloc de saturation 51 entre une valeur minimale Mᵢₙ et une valeur maximale Mₐₓ de façon à fournir sur sa sortie 52 une valeur de consigne de position de la vanne EGR 9 notée P_{EGR.cons}. La consigne de position du volet d'admission soit P_{adm.cons} est obtenue à la sortie de l'additionneur 53 qui reçoit, par la connexion 54, sur son entrée positive la somme du signal issu du régulateur PID 49 et de la valeur de prépositionnement et, sur son entrée négative, la valeur maximale de limitation Mₐₓ du bloc de saturation 51.

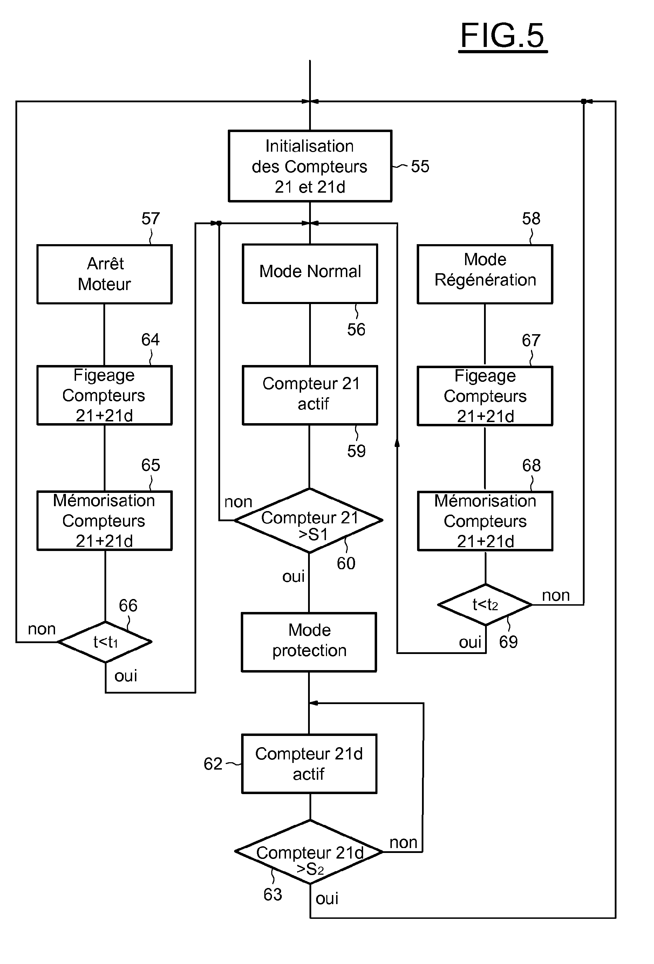

La figure 5 illustre à titre d'exemple les différentes étapes de mise en oeuvre d'un procédé de protection thermique de la vanne EGR 9 utilisant le système qui vient d'être décrit.

On procède tout d'abord à l'initialisation à zéro des compteurs 21 et 21d à l'étape 55. Les étapes suivantes dépendent du mode de fonctionnement du moteur, qui est soit un mode de fonctionnement normal, auquel cas l'étape 56 s'applique, soit l'arrêt du moteur, auquel cas l'étape 57 s'applique, soit encore un mode de régénération du filtre à particules 14 visible sur la figure 1, auquel cas l'étape 58 s'applique.

Dans le cas d'un fonctionnement normal du moteur selon l'étape 56, le compteur d'activation 21 est actif comme indiqué à l'étape 59. La durée totale pondérée cumulée de fonctionnement du moteur sur certains points de fonctionnement, qui tendent à augmenter la température de la vanne EGR 9, est diminuée de la durée totale pondérée cumulée de fonctionnement du moteur sur d'autres points de fonctionnement qui, au contraire, tendent à diminuer ou tout au moins à ne pas augmenter la température de la vanne EGR 9. La pondération est faite comme indiquée précédemment, par les coefficients de pondération mémorisés dans les cartographies 22 et 23 utilisées alternativement selon que la vanne de by-pass 15 est ouverte ou fermée. A l'étape 60 qui est effectuée dans le comparateur 33 visible sur la figure 2, on compare l'état du compteur 21 au seuil S₁. Tant que l'état du compteur est inférieur au seuil S1, le fonctionnement se poursuit comme indiqué précédemment. Dès que l'état du compteur 21 atteint le seuil S₁, un bit d'activation de la stratégie de protection thermique apparaît à la sortie de la bascule 35 visible sur la figure 2, et le fonctionnement du moteur est basculé en mode de protection thermique selon l'étape 61, avec augmentation d'au moins 20% du débit d'air.

Le compteur de désactivation 21d est alors activé, de façon à prendre en compte la durée totale pondérée cumulée de fonctionnement du moteur sur les points de fonctionnement qui permettent une diminution de température de la vanne EGR 9, diminuée de la durée totale pondérée cumulée de fonctionnement du moteur sur des points de fonctionnement qui au contraire ont tendance à augmenter la température de la vanne EGR 9. Ce fonctionnement du compteur de désactivation 21d est symbolisé sur la figure 5 par l'étape 62. On teste ensuite à l'étape 63, dans le comparateur 33d visible sur la figure 2, l'état du compteur de désactivation 21d par rapport au seuil S₂. Tant que le seuil S₂ n'est pas atteint, le compteur 21d reste actif et le moteur reste en mode de protection thermique dans lequel le débit d'air admis est augmenté d'au moins 20%, de façon à entraîner un fonctionnement du moteur provoquant une diminution de température de la vanne EGR 9.

Lorsque le seuil S₂ est atteint, signifiant que la durée cumulée pondérée du fonctionnement du moteur thermique sur des points de fonctionnement diminuant la température de la vanne EGR 9 a été suffisant pour que la température de ladite vanne EGR soit revenue a un niveau de température acceptable, on revient à l'étape 55 et les deux compteurs 21 et 21d sont réinitialisés. Si le moteur est toujours en fonctionnement normal, le fonctionnement se poursuit à partir de l'étape 56 comme précédemment indiqué.

Dans le cas d'un arrêt du moteur, on procède tout d'abord à l'étape 64, au figeage du contenu des deux compteurs 21 et 21d. Le contenu de ces deux compteurs est mémorisé à l'étape 65 dans l'unité électronique de contrôle 18 illustrée sur la figure 1, par exemple dans une mémoire EEPROM. Si la durée d'arrêt « t » est inférieure à une durée t₁ qui peut être par exemple de l'ordre de quelques minutes, de préférence entre 3 et 6 minutes, l'état antérieur des deux compteurs est conservé dans la mémoire et réutilisé dès que le moteur est de nouveau mis en fonctionnement. On repart alors à l'étape 56 avec un contenu des compteurs respectifs 21 et 21d tel qu'il était avant l'arrêt du moteur. En fonction de l'état des deux compteurs respectifs, on peut donc se trouver soit en mode de fonctionnement normal, sur l'étape 56, soit en mode de protection thermique selon l'étape 64. Si au contraire l'arrêt du moteur est plus long que la durée t₁, les compteurs 21 et 21d sont réinitialisés conformément à l'étape 55 et le processus se poursuit par l'étape 56.

Lorsqu'il est nécessaire de procéder à la régénération du filtre à particules 14 illustré sur la figure 1, ce qui peut être détecté par des moyens connus et pris en compte par l'unité électronique de commande 18, celle-ci peut déclencher des mesures appropriées pour élever la température du filtre à particules 14 afin d'éliminer les particules de suie qui s'y sont accumulées. Lorsque le moteur fonctionne de façon à assurer cette phase de régénération, le processus de l'étape 58 se poursuit par l'étape 67, consistant à figer le contenu des compteurs 21 et 21d puis par l'étape 68 de mémorisation de l'état desdits compteurs dans l'unité électronique de contrôle 18, par exemple dans une mémoire EEPROM. On teste ensuite à l'étape 69 la durée de la phase de régénération qui est normalement égale à t₂. Lorsque la phase de régénération est momentanément arrêtée, c'est-à-dire lorsque sa durée est inférieure à la durée t₂, on revient au fonctionnement normal du moteur par l'étape 56. Les deux compteurs 21 et 21d ont gardé l'état qu'ils avaient avant le début de la phase de régénération et le moteur fonctionne à nouveau en mode normal ou en mode de protection thermique selon l'état de compteurs respectifs 21 et 21d. Lorsque la phase de régénération est plus longue, c'est-à-dire lorsqu'elle est supérieure ou égale à la durée t₂, qui peut être de l'ordre de 5 à 10 min., on revient à l'étape 55, et les deux compteurs 21 et 21d sont réinitialisés à zéro.

## Revendications

1. Système de contrôle d'un moteur à combustion interne du type comportant une boucle de recirculation partielle des gaz d'échappement munie d'une vanne de régulation de débit (9), ledit système comprenant une unité électronique de contrôle (18) capable de contrôler le fonctionnement du moteur selon différentes lois de contrôle et différents paramètres caractéristiques du moteur, **caractérisé par le fait qu'**il comprend un compteur d'activation (21) associé à au moins une cartographie de pondération (22, 23) contenant un ensemble mémorisé de coefficients de pondération en fonction de points de fonctionnement normal du moteur, ledit compteur d'activation étant capable de fournir un signal d'activation d'une stratégie de protection thermique de la vanne de régulation lorsque la durée totale pondérée cumulée de fonctionnement du moteur sur certains points de fonctionnement, diminuée de la durée totale pondérée cumulée de fonctionnement du moteur sur d'autres points de fonctionnement, dépasse un premier seuil.

2. Système selon la revendication 1 comprenant un moyen d'activation/désactivation (39) recevant le signal issu du compteur d'activation et capable d'augmenter la valeur de consigne du débit d'air admis dans le moteur en fonction dudit signal pour adopter une stratégie de protection thermique.

3. Système selon l'une des revendications 1 ou 2 comprenant un compteur de désactivation (21d) associé à au moins une cartographie de pondération (22d, 23d) contenant un ensemble mémorisé de coefficients de pondération en fonction de points de fonctionnement normal du moteur, ledit compteur de désactivation étant capable de fournir un signal de désactivation de la stratégie de protection thermique de la vanne de régulation lorsque la durée totale pondérée cumulée de fonctionnement du moteur sur certains points de fonctionnement, diminuée de la durée totale pondérée cumulée de fonctionnement du moteur sur d'autres points de fonctionnement, dépasse un deuxième seuil.

4. Système selon la revendication 4 dans lequel le moyen d'activation/désactivation (35) reçoit le signal issu du compteur de désactivation (21d) et est capable de diminuer la valeur de consigne du débit d'air admis dans le moteur correspondant à la stratégie de protection thermique jusqu'à une valeur de consigne correspondant au fonctionnement normal du moteur.

5. Système selon l'une des revendications précédentes dans lequel la boucle de recirculation comporte un échangeur de chaleur (17) de refroidissement des gaz d'échappement et une conduite de dérivation (10) pour by-passer ledit échangeur, chaque compteur (21, 21d) étant associé à deux cartographies de pondération, dont l'une tient compte de l'utilisation de la conduite de dérivation.

6. Système selon l'une des revendications précédentes dans lequel les seuils sont déterminés en fonction de la température de l'air admis dans le moteur.

7. Système selon l'une des revendications précédentes comprenant des moyens pour mémoriser l'état de chaque compteur lors d'un arrêt du moteur.

8. Procédé de protection thermique d'une vanne de régulation du débit des gaz d'échappement recirculés dans un moteur à combustion interne **caractérisé par le fait qu'**on détecte l'atteinte d'une limite thermique autorisée lors d'un fonctionnement normal du moteur et la fin du besoin d'une stratégie de protection thermique en comptabilisant la durée totale cumulée de fonctionnement du moteur sur certains points de fonctionnement, diminuée de la durée totale cumulée de fonctionnement du moteur sur d'autres points de fonctionnement, on compare le résultat à des seuils et on active ou désactive une stratégie de protection thermique de la vanne de régulation en fonction du résultat de la comparaison.

9. Procédé selon la revendication 8 dans lequel les durées cumulées sont pondérées en fonction du point de fonctionnement du moteur.

10. Procédé selon l'une des revendications 8 et 9 dans lequel on tient compte de la température de l'air admis dans le moteur pour la détermination des seuils et/ou des phases d'arrêt du moteur.
